Europäisches Patentamt

European Patent Office

Office européen des brevets

(19)

(11) Numéro de publication : **0 119 918**
**B1**

(12) **FASCICULE DE BREVET EUROPÉEN**

(45) Date de publication du fascicule du brevet :
01.10.86

(21) Numéro de dépôt : 84400509.0

(22) Date de dépôt : 13.03.84

(51) Int. Cl.⁴ : **B 60 S 1/52, B 60 J 1/20**

(54) Visière avec dispositif d'arrosage pour lunette arrière de véhicule.

(30) Priorité : 21.03.83 FR 8304594

(43) Date de publication de la demande :
26.09.84 Bulletin 84/39

(45) Mention de la délivrance du brevet :
01.10.86 Bulletin 86/40

(84) Etats contractants désignés :
DE GB IT

(56) Documents cités :
FR-A- 1 117 246
FR-A- 1 488 526
FR-A- 2 239 875
US-A- 3 414 317
US-A- 4 368 605

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**.F-92200 Neuilly-sur-Seine (FR)**

(72) Inventeur : **Roncin, Patrice**
**2bis, Clos Bousselin**
**F-95140 Garges-les-Gonesse (FR)**

(74) Mandataire : **Durand, Yves Armand Louis et al**
**Cabinet Z. Weinstein 20, Avenue de Friedland**
**F-75008 Paris (FR)**

## Description

La présente invention a essentiellement pour objet une visière de protection anti-solaire adaptable notamment sur la vitre de lunette arrière d'un véhicule automobile.

Il est déjà connu de munir la vitre de lunette arrière d'un véhicule d'une visière extérieure afin de protéger les passagers de ce véhicule contre l'action du soleil (US-A-4 368 605). La visière tend d'ailleurs actuellement à remplacer les rideaux intérieurs déployables et qui ne sont pas assez efficaces.

Toutefois, l'emploi de visières extérieures présente un certain nombre d'inconvénients en particulier sur le plan du libre accès à la vitre sous-jacente afin d'assurer les opérations périodiques de nettoyage.

A cet égard, il est connu d'utiliser sous le corps de visière et indépendamment de celui-ci, divers moyens de nettoyage de la vitre, tels que par exemple un balai « essuie-vitre » muni d'une rampe d'arrosage couplée à ce balai, ou bien un gicleur solidaire de la carrosserie du véhicule. Ces divers moyens, qui encore une fois sont indépendants du corps de la visière, demeurent coûteux, encombrants, fragiles et d'une accessibilité difficile.

La présente invention a pour but notamment de remédier aux inconvénients ci-dessus, en proposant une visière de protection perfectionnée adaptable notamment sur la vitre de lunette arrière d'un véhicule automobile et essentiellement caractérisée en ce qu'un système d'arrosage de la vitre sous-jacente fait partie de ladite visière.

On comprend donc que la visière de l'invention remplit avantageuseement la double fonction de protection anti-solaire et d'arrosage ou nettoyage de la lunette arrière.

Suivant un premier mode de réalisation de l'invention, le système d'arrosage précité est constitué par une rampe d'arrosage solidaire d'au moins une membrure de la visière, telle que par exemple la membrure centrale reliant les éléments supérieur et inférieur du cadre de la visière. Dans ce cas la rampe d'arrosage peut être constituée par un évidement tubulaire pratiqué dans la membrure précitée qui comporte une pluralité d'ajutages débouchant de préférence de chaque côté de ladite membrure, ou la rampe d'arrosage peut être constituée par un élément tubulaire rapporté sur la membrure. Dans ce dernier cas, l'élément tubulaire précité est de préférence fixé et encastré dans des encoches ou analogues pratiquées dans l'un des bords de la membrure.

Selon encore un autre mode de réalisation de l'invention, l'élément tubulaire précité forme une boucle à deux branches sensiblement parallèles perforées s'étendant de part et d'autre de la membrure.

On ajoutera encore ici que les deux branches précitées sont réunies par des brides ou analogues en forme d'étriers fixés dans les encoches de la membrure.

L'invention vise encore un véhicule équipé d'une visière répondant aux caractéristiques susmentionnées.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue partielle de dessous et en perspective d'un premier mode de réalisation de visière conforme aux principes de l'invention.

La figure 2 est une vue en coupe de la membrure centrale de cette visière, faite suivant la ligne II-II de la figure 1.

La figure 3 est une vue partielle de dessous et en perspective éclatée d'un autre mode de réalisation de visière conforme à l'invention.

La figure 4 est une vue de côté partiellement en coupe de la visière de la figure 3, et montrant la rampe d'arrosage en position montée sur la membrure centrale de ladite visière.

Comme on le voit sur les figures, les visières de protection adaptables sur la vitre de lunette arrière 1 d'un véhicule comprennent généralement une membrure centrale 2 qui reçoit une pluralité de volets déflecteurs transversaux 3, 4 s'étendant de part et d'autre de la membrure 2. Les extrémités de la membrure centrale 2 sont respectivement implantées sur l'élément supérieur 5 et l'élément inférieur (non représenté) d'un cadre dont les éléments latéraux (non représentés) reçoivent les extrémités des volets 3 et 4.

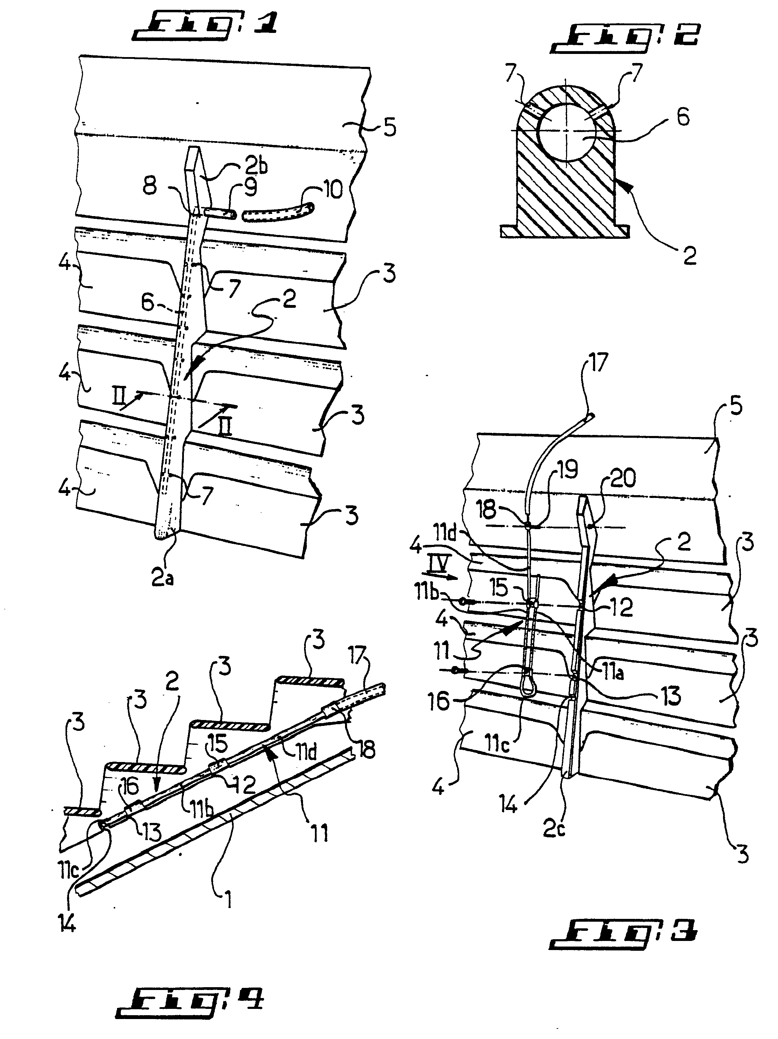

Suivant l'exemple de réalisation illustré par les figures 1 et 2, un évidement tubulaire 6 formant rampe d'arrosage de la vitre 1 est pratiqué dans la membrure centrale 2 sur tout ou partie de sa zone de crête 2a. Comme on le voit mieux sur la figure 2, l'évidement tubulaire 6 comporte une pluralité d'orifices ou ajutages 7 disposés et orientés de façon à permettre l'arrosage rationnel de la vitre 1 recouverte par la visière au niveau des zones balayées par le ou les balais « essuie-vitre ».

Ainsi, comme on le voit sur les figures 1 et 2, les ajutages 7 déboucheront de préférence de chaque côté de la membrure 2. L'évidement tubulaire ou canalisation 6 débouche en 8 à l'extrémité supérieure 2b de la membrure 2, et, à cet endroit, on prévoit un embout 9 de branchement faisant saillie sous la visière. L'embout 9 est raccordé à une source de liquide de nettoyage sous pression (non représentée) par l'intermédiaire d'une conduite souple repérée schématiquement en 10.

Ainsi, comme on le comprend, la distribution de liquide de nettoyage par les orifices 7 s'effectuera sous la forme de jets multiples sur la vitre 1, la projection de ce liquide étant dépendante ou non de la mise en service du balai d'essuie-glace. Bien entendu, on peut prévoir l'arrivée de liquide de nettoyage à l'une ou l'autre des extrémités de la membrure centrale 2, sans sortir du cadre de l'invention. De même, l'orientation et le nombre des orifices ou ajutages 7 peuvent être quelconques.

Suivant le mode de réalisation illustré par les figures 3 et 4, un élément tubulaire formant conduite d'arrosage 11 est rapporté sur la ligne de crête ou bord 2c de la membrure centrale de la visière. La rampe 11 est fixée et encastrée dans des encoches 12, 13, 14 pratiquées dans la ligne de crête ou bord de la membrure 2.

Plus précisément, la conduite d'arrosage 11 forme une boucle à deux branches 11a, 11b sensiblement parallèles et perforées qui sont réunies par des brides en forme d'étriers 15, 16. Ces étriers 15 et 16 sont respectivement fixés dans les encoches 12 et 13 par l'intermédiaire de vis par exemple, tandis que l'encoche 14 reçoit la boucle terminale 11c de la conduite souple 11.

Dès lors, la conduite 11 ainsi encastrée dans la membrure centrale 2 ne procure aucune saillie en direction de la vitre 1 et laisse entièrement dégagé l'espace entre la visière et ladite vitre, c'est-à-dire les zones qui doivent être balayées par le ou les balais d'essuie-glace.

Comme on peut le voir sur les figures 3 et 4, les brides ou étriers 15 et 16 comportent chacun, et comme cela est connu en soi, deux voûtes coiffant respectivement les branches 11a et 11b de la conduite souple 11, étant entendu, qu'une fois ces étriers fixés dans le fond des encoches 12 et 13, les branches perforées 11a et 11b seront situées de part et d'autre de la membrure centrale 2. Ainsi, les branches 11a et 11b assureront une projection ou distribution bilatérale équilibrée en liquide de nettoyage sur la vitre 1.

Le liquide de nettoyage sera fourni à la rampe d'arrosage 11 par l'intermédiaire d'une canalisation souple 17, et il est avantageusement prévu une consolidation de l'assemblage au niveau du branchement rampe 11-canalisation 17, par exemple au moyen d'un manchon 18 avec vis latérale 19 permettant un verrouillage de l'extrémité 11d de la rampe 11 sur par exemple l'une des faces latérales de la membrure 2. A cet effet, on a montré en 20 sur la figure 3 un orifice ménagé dans ladite membrure et permettant le verrouillage en question.

On a donc réalisé suivant l'invention, une visière à système d'arrosage incorporé ou rapporté qui est remarquablement compact et efficace pour permettre le nettoyage de la lunette arrière d'un véhicule automobile, un tel système laissant entièrement dégagée la vitre sous-jacente qui peut par conséquent être balayée par un ou plusieurs balais d'un type et d'un encombrement quelconques.

Bien entendu, l'invention n'est nullement limitée aux modes de réalisation décrits et illustrés qui n'ont été donnés qu'à titre d'exemple.

C'est ainsi que l'on pourrait très bien, sans sortir du cadre de l'invention, envisager d'intégrer ou de rapporter la rampe d'arrosage sur un élément de visière autre que la membrure centrale, tel que par exemple sur les volets déflecteurs, ou l'un ou l'autre des éléments du cadre de la visière.

## Revendications

1. Visière de protection anti-solaire adaptable notamment sur la vitre de lunette arrière d'un véhicule automobile, caractérisée en ce qu'un système d'arrosage de la vitre sous-jacente fait partie de ladite visière.

2. Visière selon la revendication 1, caractérisée en ce que le système d'arrosage précité est constitué par une rampe d'arrosage solidaire d'au moins une membrure de la visière, telle que par exemple la membrure centrale (2) reliant les éléments supérieur (5) et inférieur du cadre de la visière.

3. Visière selon la revendication 1 ou 2, caractérisée en ce que la rampe d'arrosage est constituée par un évidement tubulaire (6) pratiqué dans la membrure précitée (2) qui comporte une pluralité d'ajutages (7) débouchant de préférence de chaque côté de ladite membrure.

4. Visière selon la revendication 1 ou 2, caractérisée en ce que la rampe d'arrosage est constituée par un élément tubulaire (11) rapporté sur la membrure.

5. Visière selon la revendication 4, caractérisée en ce que l'élément tubulaire précité (11) est fixé et encastré dans des encoches (12, 13, 14) ou analogues pratiquées dans l'un des bords de la membrure (2).

6. Visière selon la revendication 4 ou 5, caractérisée en ce que l'élément tubulaire précité (11) forme une boucle à deux branches (11a, 11b) sensiblement parallèles et perforées s'étendant de part et d'autre de la membrure (2).

7. Visière selon l'une des revendications 4 à 6, caractérisée en ce que les deux branches précitées (11a, 11b) sont réunies par des brides (15, 16) ou analogues en forme d'étriers fixés dans les encoches (12, 13, 14) de la membrure (2).

8. Véhicule équipé d'une visière selon l'une quelconque des revendications précédentes.

## Claims

1. Antisolar protection visor adaptable in particular on the rear window pane of an automotive vehicle, characterized in that a system for sprinkling the subjacent pane forms a part of the said visor.

2. Visor according to claim 1, characterized in that the aforesaid sprinkling system consists of a sprinkling manifold rigidly connected with at least one member of the visor such for instance as the central member (2) connecting the upper (5) and lower elements of the frame of the visor.

3. Visor according to claim 1 or 2, characterized in that the sprinkling manifold consists of a tubular recess (6) made in the aforesaid member (2) which comprises a plurality of nozzles (7) opening preferably on each side of the said member.

4. Visor according to claim 1 or 2, characterized in that the sprinkling manifold consists of a tubular element (11) fitted to the member.

5. Visor according to claim 4, characterized in that the aforesaid tubular element (11) is fastened and fitted into the notches (12, 13, 14) or the like made in one of the edges of the member (2).

6. Visor according to claim 4 or 5, characterized in that the aforesaid tubular element (11) forms a loop with two substantially parallel and perforated legs (11a, 11b) extending on either side of the member (2).

7. Visor according to one of claims 4 to 6, characterized in that both aforesaid legs (11a, 11b) are united by stirrup-like collars (15, 16) or the like secured in the notches (12, 13, 14) of the member (2).

8. Vehicle fitted with a visor according to any one of the foregoing claims.

**Patentansprüche**

1. Insbesondere an der Heckfensterscheibe eines Kraftfahrzeugs anpassbare Sonnenschutzblende, dadurch gekennzeichnet, dass eine Einrichtung zum Besprengen der darunter liegenden Scheibe Bestandteil der besagten Blende ist.

2. Blende nach Anspruch 1, dadurch gekennzeichnet, dass die vorgenannte Sprengeinrichtung durch einen mit wenigstens einem Glied der Blende wie z. B. dem den oberen (5) und unteren Teil des Rahmens der Blende verbindenden mittleren Glied (2) fest verbundenen Sprengsammler gebildet wird.

3. Blende nach Anspruch 1 oder 2, dadurch gekennzeichnet, dass der Sprengsammler durch eine in dem vorgenannten Glied (2) eingearbeitete rohrförmige Aussparung (6) gebildet wird, die eine Mehrzahl von vorzugsweise beider seits des besagten Gliedes ausmündenden Düsen (7) aufweist.

4. Blende nach Anspruch 1 oder 2, dadurch gekennzeichnet, dass der Sprengsammler durch ein an dem Glied angebrachtes rohrförmiges Element (11) gebildet wird.

5. Blende nach Anspruch 4, dadurch gekennzeichnet, dass das vorgenannte rohrförmige Element (11) in in einem der Ränder des Gliedes (2) eingearbeiteten Kerben (12, 13, 14) oder dergleichen, befestigt und eingelassen ist.

6. Blende nach Anspruch 4 oder 5, dadurch gekennzeichnet, dass das vorgenannte rohrförmige Element (11) eine Schlaufe mit im wesentlichen zwei parallelen und gelochten beiderseits des Gliedes (2) verlaufenden Schenkeln (11a, 11b) gebildet wird.

7. Blende nach einem der Ansprüche 4 bis 6, dadurch gekennzeichnet, dass die beiden vorgenannten Schenkel (11a, 11b) durch in den Kerben (12, 13, 14) des Gliedes (2) befestigten, bügelartigen Klemmen (15, 16) oder dergleichen vereinigt sind.

8. Mit einer Blende nach irgendeinem der vorangehenden Ansprüche ausgerüstete Fahrzeug.

0 119 918

Fig. 1

Fig. 2

Fig. 3

Fig. 4

1